# EUROPÄISCHE PATENTSCHRIFT

(11) **EP 3 310 938 B1**
(45) Veröffentlichungstag und Bekanntmachung des Hinweises auf die Patenterteilung: **11.12.2019**
(21) Anmeldenummer: 16730352.8
(22) Anmeldetag: 16.06.2016
(51) Int. Cl.: C23C 2/00, F16C 13/00, C23C 2/38, F16C 13/02, C23C 2/40, B28B 11/00

(54) **ROLLE ZUR UMLENKUNG ODER FÜHRUNG EINES ZU BESCHICHTENDEN METALLBANDES IN EINEM METALLISCHEN SCHMELZENBAD**
ROLLER FOR DEFLECTING OR GUIDING A METAL STRIP TO BE COATED IN A METAL MELT BATH
ROULEAU DE DÉVIATION OU DE GUIDAGE D'UNE BANDE MÉTALLIQUE À REVÊTIR DANS UN BAIN DE MÉTAL EN FUSION

(30) Priorität: 22.06.2015 DE 102015211489
(43) Veröffentlichungstag der Anmeldung: 25.04.2018
(73) Patentinhaber: ThyssenKrupp Steel Europe AG, 47166 Duisburg (DE); thyssenkrupp AG, 45143 Essen (DE)
(72) Erfinder: BERGEN, Jegor, 47495 Rheinberg (DE); DR., NORDEN, Martin, 45276 Essen (DE); SPELZ, Florian, 46047 Oberhausen (DE)
(74) Vertreter: ThyssenKrupp Steel Europe AG
(86) Internationale Anmeldenummer: PCT/EP2016/063821
(87) Internationale Veröffentlichungsnummer: WO 2016/207049

(56) Entgegenhaltungen:
- EP-A1- 0 292 953
- WO-A1-2012/136713
- DE-A1- 19 638 079
- DE-A1-102009 034 017
- DE-A1-102011 078 878

## Beschreibung

Die Erfindung betrifft eine Rolle zur Umlenkung oder Führung eines zu beschichtenden Metallbandes in einem metallischen Schmelzenbad, mit einem Rollenmantel aus Stahl und damit verbundenen, koaxial zueinander angeordneten Lagerzapfen aus Stahl zur Drehlagerung der Rolle, wobei an dem jeweiligen Lagerzapfen ein im Wesentlichen zylindrischer oder kreisscheibenförmiger Verbindungsabschnitt aus Stahl vorgesehen ist, der sich radial in Richtung des Rollenmantels erstreckt, und wobei mindestens einer der Verbindungsabschnitte mindestens eine stirnseitig des Rollenmantels mündende Durchgangsöffnung aufweist.

Beim Schmelztauchbeschichten von Metallband, insbesondere Stahlband, wird das zu beschichtende Band mittels einer im Schmelzenbad angeordneten Umlenkrolle durch die metallische Schmelze geleitet. Zusätzlich wird der aus dem Schmelzenbad herauslaufende Bandabschnitt üblicherweise durch ebenfalls im Schmelzenbad angeordnete Führungsrollen (sogenannte "Stabirollen", Stabilisierungsrollen oder Passline-Rollen) geführt, um einen im Wesentlichen vertikalen und schwingungsfreien Verlauf des Bandes durch einen von Abstreifdüsen begrenzten Spalt sicherzustellen. Mittels der Abstreifdüsen wird überschüssiges Beschichtungsmaterial vom Band abgetrennt bzw. die Schichtdicke des am Band anhaftenden Beschichtungsmaterials eingestellt.

Die in Schmelztauchbeschichtungsanlagen des Standes der Technik verwendeten Umlenkrollen und Führungsrollen sind als Vollmaterialrollen, offene Mantelrollen oder geschlossene Hohlrollen ausgeführt.

Geschlossene Hohlrollen finden heute noch Anwendung, sind aber nur mit aufwendiger Belüftungs- oder Entlüftungstechnik zu betreiben, da es aufgrund der hohen Temperaturen im Schmelzenbad bei geschlossenem Rollenhohlraum zu sehr hohen Innendrücken bis hin zum explosionsartigen Versagen kommen kann, insbesondere bei ungewollten Flüssigkeitseinschlüssen im Rollenhohlraum.

Aufgrund des Umstandes, dass die Umlenk- und Führungsrollen im Schmelzenbad normalerweise nicht mit einem eigenen Antrieb versehen sind, sondern durch die Bewegung des an ihnen mit Umschlingung anliegenden Bandes gedreht werden, ist die Verwendung von Vollmaterialrollen insbesondere bei der Schmelztauchbeschichtung von dünnen Bändern problematisch. Durch das hohe Gewicht von Vollmaterialrollen wird insbesondere bei dünnen Bändern eine Drehung der Rollen durch das Band erschwert, was zu Relativbewegungen (Schlupf) zwischen Band und Rolle führen kann. Hierdurch können Kratzer und andere Beschichtungsfehler verursacht werden, welche die Beschichtungsqualität mindern.

Mantelrollen bestehen üblicherweise aus einem hohlzylindrischen Mantelrohr, das an seinen beiden Enden über speichenartige Stege oder Aussparungen, z.B. Bohrungen aufweisende Stirnplatten mit den Lagerzapfen verbunden ist. Als Mantelrollen ausgeführte Schmelzenbadrollen haben den Vorteil, dass sie sich im Vergleich zu den schweren Vollmaterialrollen leichter drehen lassen und im Vergleich zu den geschlossenen Hohlrollen keinen geschlossenen Hohlraum, in welchem ein kritischer Innendruck auftreten kann, aufweisen. Aufgrund der stirnseitigen Öffnungen stellt sich jedoch bei der Drehung der Mantelrollen eine Pumpwirkung ein, wodurch es im Bereich der speichenartigen Stege bzw. der Aussparungen der Stirnplatten zu einem turbulenten Stoffstrom der Metallschmelze kommt, der zu einem sehr erheblichen Materialabtrag (Verschleiß) im Bereich der Stege bzw. Stirnplatten führt. Aus diesem Grund ist die Standzeit von in Schmelztauchbeschichtungsanlagen verwendeten Mantelrollen relativ gering.

Den genannten Bauformen der Umlenk- und Führungsrollen ist gemein, dass ihre Drehlager üblicherweise als Gleitlager ausgeführt werden, wobei die Lagerzapfen der Rollen (sowie die die Lagerzapfen aufnehmenden Gegenlager) sehr hohen Verschleißeinwirkungen unterworfen sind. Der hohe Verschleiß der Lagerzapfen ist hauptsächlich durch die hohen Lagerkräfte und die Aggressivität der Metallschmelze bedingt.

Gattungsgemäße Rollen sind beispielsweise aus den Offenlegungsschriften US 2007/0074657 A1, DE 37 18286 A1, WO 2012/136713 A1 oder EP 0 292 953 A1 bekannt. Aus DE 10 2011 078 878 A1 ist eine Vorrichtung zur Druckminderung in Hohlkörpern in Medien bei höheren Temperaturen bekannt. Aus DE 10 2009 034 017 A1 ist ein Dichtungssystem für eine Schmelztauchbeschichtungsvorrichtung bekannt. Aus DE 196 38 079 A1 ist ein Verbundrohr bekannt, das aus einem Innenrohr und einem Außenrohr, welche durch eine tragende Schicht verbunden sind, bekannt.

Davon ausgehend lag der vorliegenden Erfindung die Aufgabe zugrunde, eine Rolle der eingangs genannten Art bereitzustellen, mit der sich eine hohe Beschichtungsqualität bei der Schmelztauchbeschichtung von Metallband, insbesondere Stahlband erzielen lässt und die zugleich relativ hohe Standzeiten bietet.

Gelöst wird diese Aufgabe durch eine Rolle mit den im Anspruch 1 angegebenen Merkmalen. Bevorzugte und vorteilhafte Ausgestaltungen der erfindungsgemäßen Rolle sind in den Unteransprüchen angegeben.

Die erfindungsgemäße Rolle weist einen Rollenmantel aus Stahl auf, der mit koaxial zueinander angeordneten Lagerzapfen aus Stahl zur Drehlagerung der Rolle verbunden ist, wobei an dem jeweiligen Lagerzapfen ein im Wesentlichen zylindrischer oder kreisscheibenförmiger Verbindungsabschnitt aus Stahl vorgesehen ist, der sich radial in Richtung des Rollenmantels erstreckt, und wobei mindestens einer der Verbindungsabschnitte mindestens eine stirnseitig des Rollenmantels mündende Durchgangsöffnung aufweist.

Die erfindungsgemäße Rolle entspricht einer Mantelrolle insoweit als ihr Rollenmantel einen Hohlraum definiert. Dieser Hohlraum weist jedoch eine Füllung auf, die als Ganzes eine geringere Dichte als die des Mantelrollenwerkstoffs aufweist. Dies wird dadurch erreicht, dass die Füllung aus mindestens einem Füllkörper besteht, in welchem mindestens ein geschlossener Hohlraum vorhanden ist. Im Vergleich zu herkömmlichen Vollmaterialrollen zeichnet sich die erfindungsgemäße Rolle durch ein relativ geringes Rollengewicht aus. Dies gilt für die erfindungsgemäße Ausführung, bei welcher der durch ihren Rollenmantel definierte Hohlraum mit Füllmaterial, das eine geringere Dichte als die des Mantelrollenwerkstoffs aufweist, verfüllt ist. Aufgrund des relativ geringen Gewichts der erfindungsgemäßen Rolle besitzt diese hinsichtlich ihrer Drehung durch das anliegende, zu beschichtende Band gute Dreheigenschaften als Voraussetzung für eine hohe Beschichtungsqualität des Bandes. Zugleich ergibt sich durch das relativ geringe Gewicht der erfindungsgemäßen Rolle eine Entlastung ihrer Drehlagerung, was günstig für das Erreichen hoher Standzeiten der Rolle ist.

Eine vorteilhafte Ausgestaltung der Erfindung sieht vor, dass eine Mehrzahl von Hohlräumen über den Querschnitt des Füllkörpers vorgesehen sind, wobei der Füllkörper erfindungsgemäß einen um die Rotationsachse der Rolle symmetrischen Querschnitt aufweist. Durch diesen symmetrischen Aufbau kann eine durch den oder die eingebrachten Füllkörper verursachte Unwucht der Rolle weitgehend vermieden werden.

Erfindungsgemäß ist der zumindest eine Füllkörper aus Längsprofilen ausgebildet, welche als Hohlprofil vorliegen und in der bevorzugten Ausführungsform miteinander verbunden, z.B. verschweißt, sind. Die Hohlräume werden durch die Verwendung von Hohlprofilen, wie Rohre oder Profile mit polygonalem Querschnitt, gebildet, welche auf beiden Seiten geschlossen sind. Alternativ oder zusätzlich können Hohlräume zwischen den verbundenen Längsprofilen, durch Verschließen beider Enden, vorgesehen werden.

In den erfindungsgemäß vorgesehenen Hohlräumen entsteht ein erhöhter Innendruck, wie auch bei den im Stand der Technik erwähnten Hohlrollen. Aufgrund der deutlich kleinen effektiven Durchmesser der Hohlräume tritt allerdings in den Füllkörpern eine deutlich geringere Spannung auf, wodurch ein explosionsartiges Versagen der Hohlräume vermieden wird. Dies ist auch durch den linearen Zusammenhang zwischen Spannung und Durchmesser in der Kesselformel zur Berechnung von Druckbehältern erklärt.

Eine weitere vorteilhafte Ausgestaltung der Erfindung ist dadurch gekennzeichnet, dass in ein oder mehrere Hohlräume des Füllkörpers ein Füllmaterial angeordnet ist. Das oder die Füllmaterialien verringern bzw. füllen das Leervolumen der Hohlräume, so dass das im Hohlraum der Rolle enthaltene Gasvolumen entsprechend reduziert oder minimiert ist. Hierdurch lässt sich die Dichte und Gewichtsverteilung im Füllkörper anpassen. Das Füllmaterial liegt bevorzugt in Form von Pulver, Granulat oder als Vlies oder Formstück vor. Insbesondere Materialien mit einer Temperaturbeständigkeit, die über der Schmelzentemperatur liegenden sind bevorzugt. Beispielsweise kommen als Füllmaterial Siliziumpulver oder Granulat aus keramischem Material als auch Stahl- oder Mineralwolle sowie Spiralen oder Profile in Betracht.

In einer weiteren Ausgestaltung erfolgt die Anpassung und Einstellen der Dichte und Gewichtsverteilung des Füllkörpers bzw. der Rolle durch die Verwendung von unterschiedlichen Längsprofilen, welche sich hinsichtlich Durchmesser und/oder Wandstärke unterscheiden. Durch eine angepasste Gewichtsverteilung lassen sich die ebenfalls die Dreheigenschaften, wie Trägheitsmoment, der Rolle einstellen.

Nach einer bevorzugten Ausgestaltung liegt die Gesamtdichte der erfindungsgemäßen Rolle im Bereich des 0,8-fachen bis 1,2-fachen, vorzugsweise 1,0-fachen bis 1,1-fachen der Dichte der verwendeten Metallschmelze, beispielsweise einer auf Aluminium oder Zink basierenden Metallschmelze. Die durch das Gewicht der Rolle verursachten Lagerkräfte sind somit relativ klein. In jedem Fall ist das Gesamtgewicht der erfindungsgemäßen Rolle erheblich geringer als das Gesamtgewicht von aus Stahl gefertigten Vollmaterialrollen.

Nachfolgend wird die Erfindung anhand einer mehrere Ausführungsbeispiele darstellenden Zeichnung näher erläutert. Es zeigen:
- Fig. 1: eine Schmelztauchbeschichtungsvorrichtung in schematischer Darstellung;
- Fig. 2: eine Ausführungsform der erfindungsgemäßen Rolle zur Anordnung in einem Schmelzenbad einer Schmelztauchbeschichtungsanlage, in einem Axialschnitt;
- Fig. 3: einen Lagerzapfen der Rolle in einer der Fig. 2 entsprechenden Ausführungsform in einem Axialschnitt;
- Fig. 4: eine Ausführungsform eines erfindungsgemäßen Längsprofils in geschnittener Darstellung;
- Fig. 5: eine Ausführungsform eines Füllkörpers in einer anderen Ausführungsform;
- Fig. 6: Querschnitt einer erfindungsgemäßen Rolle in einer Ausführungsform;
- Fig. 7: Querschnitt einer weiteren Ausführungsform der erfindungsgemäßen Rolle;
- Fig. 8: Querschnitt einer weiteren Ausführungsform der erfindungsgemäßen Rolle;
- Fig. 9: Querschnitt einer weiteren Ausführungsform der erfindungsgemäßen Rolle.

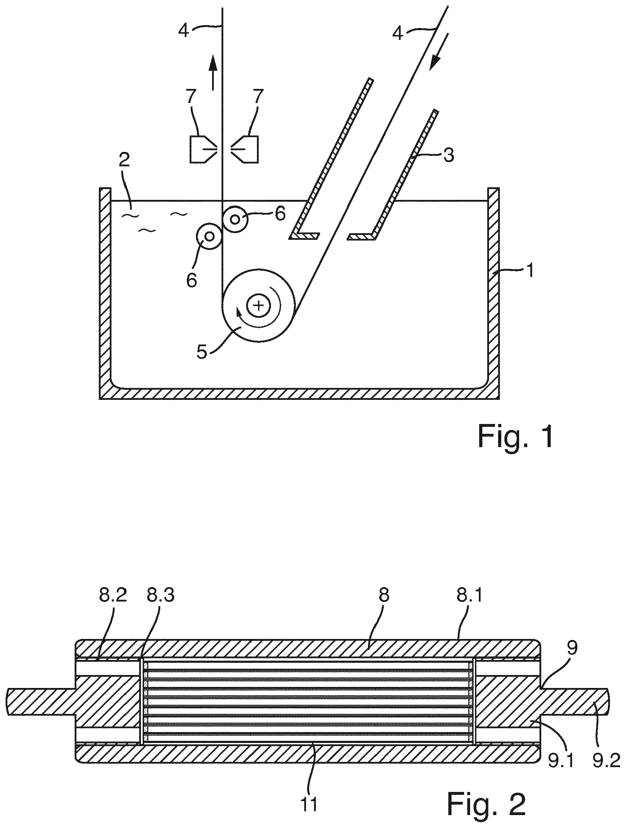

Die in Fig. 1 schematisch dargestellte Schmelztauchbeschichtungsvorrichtung umfasst ein Schmelzenbadgefäß 1, das mit einer metallischen Schmelze 2, beispielsweise einer auf Aluminium oder Zink basierenden Metallschmelze befüllt ist. Über einen in die Metallschmelze 2 eingetauchten Rüssel 3 wird ein zu beschichtendes Stahlband 4 in die Metallschmelze 2 geleitet. In dem Schmelzenbadgefäß 1 ist eine Umlenkrolle (sogenannte Tauch- oder Pottrolle) 5 angeordnet, mittels der das Stahlband 4 aus der schräg abwärtsgerichteten Laufrichtung in eine nach oben gerichtete, vorzugsweise im Wesentlichen vertikale Laufrichtung umgelenkt wird. Des Weiteren sind in dem Schmelzenbadgefäß 1 eine oder zwei Führungsrollen (sogenannte Stabilisierungsrollen oder "Stabirollen") 6 angeordnet, welche dazu dienen, Schwingungen des Stahlbandes 4 zu unterdrücken und damit für einen möglichst lagegenauen Verlauf des Bandes 4 in Bezug auf eine Abstreifvorrichtung 7 zu sorgen. Die Abstreifvorrichtung entfernt überschüssiges Beschichtungsmaterial von der Oberfläche des beschichteten Stahlbandes 4 und weist hierzu typischerweise mit Druckluft oder Inertgas betriebene Abstreifdüsen 7 in Form von Flachstrahldüsen auf.

Die Umlenkrolle 5 und/oder mindestens eine Führungsrolle 6 haben einen Aufbau, der beispielhaft in den Figuren 2 bis 9 dargestellt ist. Die Rolle 5 oder 6 weist einen Rollenmantel 8 aus Stahl, beispielsweise Chrom-Molybdän-Stahl auf. Der Rollenmantel 8 ist rohrförmig ausgebildet. Die Mantelfläche 8.1 der Rolle kann dabei bombiert ausgeführt sein, so dass der Außendurchmesser der Rolle 5 oder 6 von der Mitte aus zu den Rollenenden hin abnimmt.

An den Enden des Rollenmantels 8 sind koaxial zueinander angeordnete Lagerzapfen 9 angeordnet, die ebenfalls aus Stahl, beispielsweise aus Chrom-Molybdän-Stahl hergestellt sind. Der jeweilige Lagerzapfen 9 weist einen im Wesentlichen zylindrischen oder kreisscheibenförmigen Verbindungsabschnitt 9.1 auf. Der Verbindungsabschnitt 9.1 ist vorzugsweise einteilig mit dem an der Stirnseite des Rollenmantels 8 axial vorstehenden Zapfenteil 9.2 ausgebildet. Der Verbindungsabschnitt 9.1 erstreckt sich von dem Zapfenteil 9.2 bzw. der Drehachse der Rolle 5 oder 6 radial in Richtung des Rollenmantels 8. Der Rollenmantel 8 weist an seinen Enden durchmessererweiterte Innenflächen 8.2 auf, die jeweils einen umlaufenden Innenabsatz 8.3 definieren. Die Verbindungsabschnitte 9.1 der Lagerzapfen 9 sind formschlüssig in die durchmessererweiterten Innenabschnitte des Rollenmantels 8 eingeschoben und mit diesem beispielsweise durch ringförmige Schweißnähte fest verbunden.

Der Außendurchmesser des Zapfenteils 9.2 des Lagerzapfens 9 ist um einen Faktor im Bereich von 3,0 bis 7,0, vorzugsweise 4,0 bis 5,0, kleiner als der Außendurchmesser des Rollenmantels 8. Die Verwendung eines Lagerzapfens 9 mit einem entsprechend kleinen Zapfendurchmesser (Durchmesser des Zapfenteils 9.2) wird bevorzugt, da das Zapfenteil 9.2 dann einen geringeren Drehwiderstand bildet und sich die Rolle 5 oder 6 somit leichter drehen lässt.

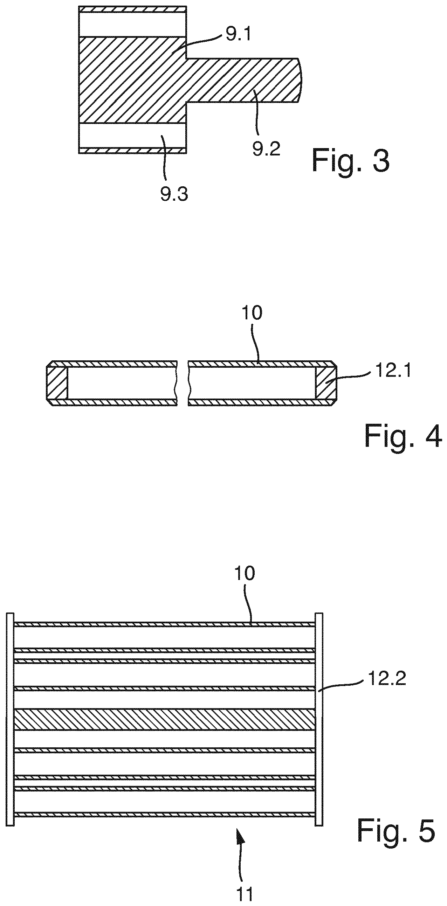

Der Verbindungsabschnitt 9.1 des jeweiligen Lagerzapfens 9 weist mindestens eine oder ,wie in den Fig. 3 dargestellt, mehrere Durchgangsöffnungen 9.3 auf, die stirnseitig des Rollenmantels 8 sowie an der innen liegenden Seite des Verbindungsabschnitts 9.1 bzw. Lagerzapfens 9 münden. In dem gezeigten Ausführungsbeispiel sind in dem jeweiligen Verbindungsabschnitt 9.1 oder Lagerzapfen 9 beispielsweise vier Durchgangsöffnungen 9.3 vorgesehen, die im Wesentlichen parallel zueinander verlaufen und gleichmäßig voneinander beabstandet auf einem gemeinsamen Teilkreis angeordnet sind. In Abwandlung dieses Ausführungsbeispiels kann der Verbindungsabschnitt 9.1 oder Lagerzapfen 9 auch weniger oder mehr als vier Durchgangsöffnungen 9.3 aufweisen.

Die jeweilige Durchgangsöffnung 9.3 ist vorzugsweise als Bohrung ausgebildet. In weiteren Ausführungsformen sind jedoch auch andere Formen oder auch eine speichenartige Ausführung des Verbindungsabschnitts 9.1 möglich.

Erfindungsgemäß ist, wie auch in den Fig. 2 und Fig. 6 bis 9 exemplarisch dargestellt, der durch den Rollenmantel 8 und die Verbindungsabschnitte 9.1 der Lagerzapfen 9 begrenzte Hohlraum der Rolle 5 oder 6 mit einem oder mehreren Füllkörpern 11 verfüllt, wobei der Füllkörper 11 mindestens einen geschlossenen Hohlraum beinhaltet.

Wie in Fig. 4 dargestellt, kann ein Hohlraum in einer erfindungsgemäßen Ausführungsform durch ein Längsprofil 10, welches beidseitig durch ein Verschlusselement 12.1 verschlossen ist, ausgebildet sein. Ein derart verschlossenes Hohlprofil 10, 10.1, 10.3, 10.4 stellt einen erfindungsgemäßen Füllkörper 11 dar. In einer bevorzugten Ausführungsform werden jedoch mehrere Längsprofile 10 zu einem Füllkörper 11 zusammengefasst und sind fest miteinander verbunden, besonders bevorzugt miteinander verschweißt.

Fig. 5 zeigt eine weitere Ausführungsform eines Füllkörpers 11, bei der mehrere Längsprofile 10 durch ein gemeinsames Verschlusselement 12.2 miteinander verbunden sind und dieses Verschlusselement 12.2 gleichzeitig die in oder zwischen den Profilen liegenden Hohlräume verschließt. Die Verbindung zwischen den Längsprofilen 10 und dem Versschlusselement 12.2 erfolgt bevorzugt mittels Schweißen.

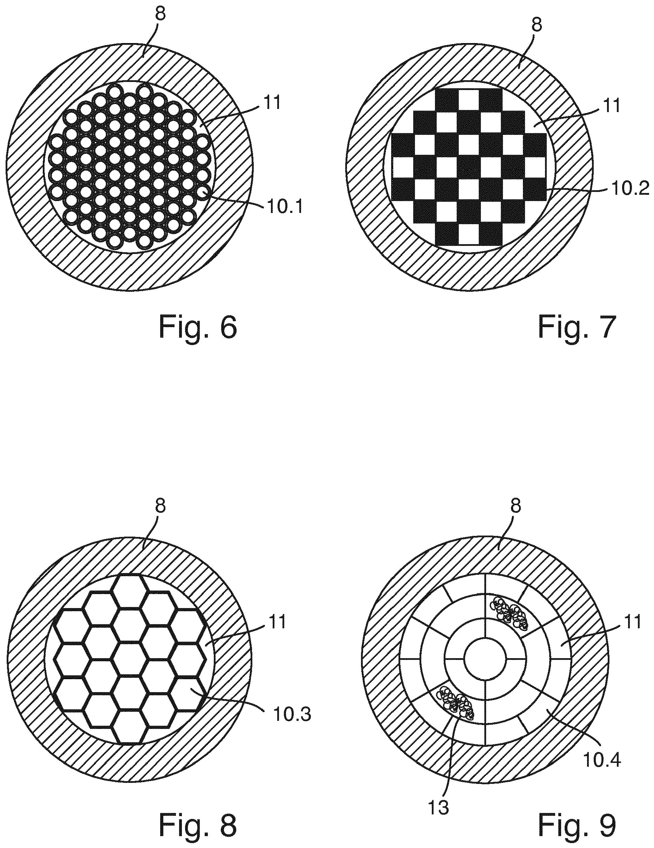

In den Fig. 6 bis 9 sind verschiedene Ausführungsformen für Füllkörper 11 dargestellt. Alle dargestellten Ausführungsbeispiele sind mit dem Rollenmantel 8 und in einer senkrecht zur Rotationsachse liegenden Schnittebene gezeigt. Der Hohlraum der Rolle 5 oder 6 zwischen den Verbindungsabschnitten 9.1 ist vorzugsweise im Wesentlichen vollständig mit den Füllkörpern 11 verfüllt. Durch die eingeschlossenen Hohlräume in den Füllkörpern 11 ergibt sich für die Rolle 5, 6 eine gegenüber dem Werkstoff des Rollenmantels 8 reduzierte Gesamtdichte. Das Durchmesserverhältnis zwischen dem Außendurchmesser und dem Innendurchmesser des Rollenmantels 8 liegt beispielsweise im Bereich von 1,2 bis 2,0, vorzugsweise im Bereich von 1,4 bis 1,6. Die Gesamtdichte der Rolle 5 oder 6 liegt beispielsweise im Bereich des 0,8-fachen bis 1,2-fachen, vorzugsweise 1,0-fachen bis 1,1-fachen der Dichte der verwendeten Metallschmelze 2, bei der es sich insbesondere um eine auf Aluminium oder Zink basierende Metallschmelze handeln kann.

Bei der in Fig. 6 dargestellten Ausführungsform wird der bzw. die Füllkörper 11 durch Rohre 10.1 als Längsprofile 10 ausgebildet. Die Ausführungsform mit Rohren 10.1 ist besonders bevorzugt, da diese hinsichtlich der auftretenden Spannungen durch den Innendruck in den Hohlräumen besonders vorteilhaft sind und sich gleichzeitig eine gute Füllung erreichen lässt.

Fig. 7 stellt eine Ausführungsform dar, in der Vollprofile 10.2, hier Vierkantprofile als Längsprofile verwendet werden, wobei diese in Längsrichtung miteinander verbunden sind. Die Hohlräume werden durch die zwischen den Profilen entstehenden Zwischenräume und beidseitig angeordnete Verschlusselemente 12.1, 12.2 gebildet.

Eine weitere Ausführungsform ist in Fig. 8 gezeigt. Hierbei sind ebenfalls regelmäßige Längsprofile 10 in dieser Ausführung mit Sechskant Hohlprofil 10.3 verwendet. Allgemein wird bei einer erfindungsgemäßen Ausgestaltung die Verwendung von Längsprofilen 10 mit einem Querschnitt bevorzugt, welcher mehrere, die Längsachse einschließende Symmetrieebenen aufweist, da diese eine gleichmäßige Dichteverteilung begünstigen, eine gute Füllung der Rolle 5, 6 ermöglichen und relativ kostengünstig sind. Fig. 9 zeigt eine weitere Ausführungsform, in der ein Füllkörper 11 aus mehreren kreissegmentförmigen Abschnitten 10.4 besteht.

Des Weiteren zeigt Fig. 9, dass zumindest ein Teil der Hohlräume mit einem Füllmaterial 13 zumindest teilweise verfüllt sind. Im gezeigten Beispiel ist ein faseriges Füllmaterial 13, wie Stahl- oder Mineralwolle, eingesetzt, da diese den Vorteil bieten, gegenüber der Betriebstemperatur beständig zu sein und lagestabil innerhalb des Hohlraums. Alternativ kann beispielsweise Si-Pulver verwendet werden.

Die Ausführung der Erfindung ist nicht auf die in der Zeichnung dargestellten Ausführungsbeispiele beschränkt. So kann beispielsweise die verwendeten Längsprofile 10 ein einem Füllkörper 11 unterschiedliche Querschnitte, Durchmesser und/oder Wandstärken aufweisen, um eine möglichst gleichmäßige und/oder eine für die Dreheigenschaften günstige Gewichtsverteilung innerhalb der Rolle zu erreichen.

Vor dem Hintergrund der Betriebstemperatur sowie dem hierdurch entstehenden Innendruck in den Hohlräumen bestehen Füllkörper 11 bevorzugt zumindest größtenteils aus Stahl. Insbesondere in Ausführungsformen von Füllkörper, die Teile aufweisen, welche nicht oder weniger druckbelastet sind, können diese auch aus anderen temperaturbeständigen und vorzugsweise geringere Dichte aufweisenden Material, wie keramischen Werkstoffen, bestehen.

Um eine Relativbewegung vor allem um die Rotationsachse zwischen Rollenmantel 8 und dem bzw. den Füllkörper 11 zu vermeiden, weisen diese in einer weiteren Ausführungsform Positioniermittel auf, mit denen die Füllkörper 11 mit dem Rollenmantel (8) und/oder Verbindungsabschnitt 9.1 sowie ggf. untereinander, vorzugsweise lösbar, verbunden sind. Hierfür eignen sich insbesondere Steckverbindungen in Form von Stiften oder Vorsprüngen.

### Bezugszeichenliste

- 1: Schmelzenbadgefäß
- 2: metallische Schmelze
- 3: Rüssel
- 4: zu beschichtendes Stahlband
- 5: Umlenkrolle (sogenannte Tauch- oder Pottrolle)
- 6: Führungsrolle (sogenannte Stabilisierungsrollen oder "Stabirollen")
- 7: Abstreifvorrichtung
- 8: Rollenmantel
8.1 Mantelfläche
8.2 Innenfläche
8.3 Innenabsatz
- 9: Lagerzapfen
9.1 Verbindungsabschnitt
9.2 Zapfenteil
9.3 Durchgangsöffnung
- 10: Längsprofil
10.1 Hohlprofil (Rohr)
10.2 Vollprofil (Vierkant)
10.3 Hohlprofil (Sechskant)
10.4 Hohlraum (Kreisringsegment)
- 11: Füllkörper
- 12: Verschlusselement
12.1 Verschlusselement (Stopfen)
12.2 Verschlusselement (Platte)
- 13: Füllmaterial

## Patentansprüche

1. Rolle (5, 6) zur Umlenkung oder Führung eines zu beschichtenden Metallbandes (4) in einem metallischen Schmelzenbad, mit einem Rollenmantel (8) aus Stahl und damit verbundenen, koaxial zueinander angeordneten Lagerzapfen (9) aus Stahl zur Drehlagerung der Rolle (5, 6), wobei an dem jeweiligen Lagerzapfen (9) ein im Wesentlichen zylindrischer oder kreisscheibenförmiger Verbindungsabschnitt (9.1) aus Stahl vorgesehen ist, der sich radial in Richtung des Rollenmantels (8) erstreckt, und wobei mindestens einer der Verbindungsabschnitte (9.1) mindestens eine stirnseitig des Rollenmantels (8) mündende Durchgangsöffnung (9.3) aufweist, **dadurch gekennzeichnet, dass** in dem Rollenmantel (8) eine Füllung aus einem oder mehreren Füllkörpern (11), welche mindestens einen geschlossenen Hohlraum aufweisen, angeordnet ist, wobei der mindestens eine Füllkörper (11) aus einem oder mehreren Längsprofilen (10, 10.1, 10.2, 10.3, 10.4) besteht, welche mindestens ein an beiden Enden geschlossenes Hohlprofil beinhalten, und dass die Füllung einen um die Rotationsachse der Rolle symmetrischen Aufbau und als Ganzes eine geringere Dichte als die des Mantelrollenwerkstoffs aufweist.

2. Rolle nach Anspruch 1, **dadurch gekennzeichnet, dass** zumindest ein Füllkörper (11) in Form eines Rohrbündels aus mehreren miteinander verbundenen Rohren (10.1) ausgebildet ist, und dass zumindest ein Teil der Rohre (10.1) an beiden Enden geschlossen sind.

3. Rolle nach einem der Ansprüche 1 oder 2, **dadurch gekennzeichnet, dass** die Längsprofile oder Rohre (10, 10.1, 10.2, 10.3, 10.4) mit gleichen oder unterschiedlichen Querschnitt sowie gleichen oder unterschiedlichen Wandstärken vorgesehen sind.

4. Rolle nach einem der Ansprüche 1 bis 3, **dadurch gekennzeichnet, dass** die Gesamtdichte der Rolle (5, 6) im Bereich des 0,8-fachen bis 1,2-fachen der Dichte der metallischen Schmelze liegt.

5. Rolle nach einem der Ansprüche 1 bis 4, **dadurch gekennzeichnet, dass** in einem oder mehreren Hohlräumen des Längsprofils des Füllkörpers einFüllmaterial (13) angeordnet ist.

6. Rolle nach Anspruch 5, **dadurch gekennzeichnet, dass** das Füllmaterial (13) in Form von Pulver, Granulat oder Vlies verwendet ist.

7. Rolle nach einem der Ansprüche 1 bis 6, **dadurch gekennzeichnet, dass** die Füllung lösbar mit dem Inneren des Rollenmantels (8) und/oder des Verbindungsabschnitts (9.1) verbunden ist.

8. Schmelztauchbeschichtungsanlage mit mindestens einer Rolle nach einem der Ansprüche 1 bis 7.

## Claims

1. Roller (5, 6) for deflecting or guiding a metal strip (4) to be coated in a metal melt bath, comprising a steel roller shell (8) and steel bearing journals (9), which are connected to the roller shell and are arranged coaxially in relation to one another for rotatably supporting the roller (5, 6), wherein a substantially cylindrical or circular disc-shaped steel connection portion (9.1), which extends radially in the direction of the roller shell (8), is provided on the respective bearing journal (9), and wherein at least one of the connection portions (9.1) has at least one through-opening (9.3), which opens at the end face of the roller shell (8), **characterized in that** a filling comprising one or more filling elements (11), which have at least one closed cavity, is arranged in the roller shell (8), wherein the at least one filling element (11) comprises one or more longitudinal profiles (10, 10.1, 10.2, 10.3, 10.4) which contain at least one hollow profile that is closed at both ends, and **in that** the filling has a structure which is symmetrical about the rotational axis of the roller and as a whole a lower density than that of the material of the roller shell.

2. Roller according to Claim 1, **characterized in that** at least one filling element (11) takes the form of a tube bundle comprising multiple interconnected tubes (10.1), and **in that** at least some of the tubes (10.1) are closed at both ends.

3. Roller according to either of Claims 1 and 2, **characterized in that** the longitudinal profiles or tubes (10, 10.1, 10.2, 10.3, 10.4) are provided with the same or different cross sections and the same or different wall thicknesses.

4. Roller according to one of Claims 1 to 3, **characterized in that** the overall density of the roller (5, 6) lies in the range of 0.8 times to 1.2 times the density of the metal melt.

5. Roller according to one of Claims 1 to 4, **characterized in that** a filling material (13) is arranged in one or more cavities of the longitudinal profile of the filling element.

6. Roller according to Claim 5, **characterized in that** the filling material (13) is used in the form of powder, granules or fleece.

7. Roller according to one of Claims 1 to 6, **characterized in that** the filling is detachably connected to the interior of the roller shell (8) and/or of the connecting portion (9.1).

8. Hot-dip coating installation with at least one roller according to one of Claims 1 to 7.

## Revendications

1. Rouleau (5, 6) pour la déviation ou le guidage d'une bande métallique à revêtir (4) dans un bain de métal en fusion, avec une enveloppe de rouleau (8) en acier et des tourillons d'appui (9) en acier assemblés à celle-ci et disposés coaxialement l'un à l'autre, pour le support rotatif du rouleau (5, 6), dans lequel il est prévu sur le tourillon d'appui respectif (9) une partie d'assemblage (9.1) en acier essentiellement cylindrique ou en forme de disque circulaire, qui s'étend radialement en direction de l'enveloppe de rouleau (8), et dans lequel au moins une des parties d'assemblage (9.1) présente au moins une ouverture de passage (9.3) débouchant du côté frontal de l'enveloppe de rouleau (8), **caractérisé en ce qu'**un remplissage constitué d'un ou de plusieurs corps de remplissage (11), qui présente(nt) au moins une cavité fermée, est disposé dans l'enveloppe de rouleau (8), dans lequel ledit au moins un corps de remplissage (11) se compose d'un ou de plusieurs profilé(s) longitudinal(aux) (10, 10.1, 10.2, 10.3, 10.4), qui comprennent au moins un profilé creux fermé aux deux extrémités, et **en ce que** le remplissage présente une structure symétrique autour de l'axe de rotation du rouleau et au total une densité plus faible que celle du matériau de l'enveloppe de rouleau.

2. Rouleau selon la revendication 1, **caractérisé en ce qu'**au moins un corps de remplissage (11) est réalisé sous la forme d'un faisceau de tubes composé de plusieurs tubes (10.1) assemblés les uns aux autres, et **en ce qu'**au moins une partie des tubes (10.1) sont fermés aux deux extrémités.

3. Rouleau selon une des revendications 1 ou 2, **caractérisé en ce que** les profilés longitudinaux ou les tubes (10, 10.1, 10.2, 10.3, 10.4) sont prévus avec des sections transversales identiques ou différentes ainsi qu'avec des épaisseurs de paroi égales ou différentes.

4. Rouleau selon l'une quelconque des revendications 1 à 3, **caractérisé en ce que** la densité globale du rouleau (5, 6) se situe dans la plage de 0,8 fois à 1,2 fois la densité du bain de métal en fusion.

5. Rouleau selon l'une quelconque des revendications 1 à 4, **caractérisé en ce qu'**un matériau de remplissage (13) est disposé dans une ou plusieurs cavité(s) du profilé longitudinal du corps de remplissage.

6. Rouleau selon la revendication 5, **caractérisé en ce que** le matériau de remplissage (13) est utilisé sous forme de poudre, de granulat ou de non-tissé.

7. Rouleau selon l'une quelconque des revendications 1 à 6, **caractérisé en ce que** le remplissage est attaché de façon séparable à l'intérieur de l'enveloppe de rouleau (8) et/ou de la partie d'assemblage (9.1).

8. Installation de revêtement par immersion en bain fondu avec au moins un rouleau selon l'une quelconque des revendications 1 à 7.
